# EUROPÄISCHE PATENTSCHRIFT

(11) **EP 0 536 441 B1**
(45) Veröffentlichungstag und Bekanntmachung des Hinweises auf die Patenterteilung: **11.08.1993**
(21) Anmeldenummer: 91117416.7
(22) Anmeldetag: 11.10.1991
(51) Int. Cl.: H02K 5/10

(54) **Mit einem unteren Ablaufloch versehenes Motorgehäuse**
Motor casing provided with a draining hole at the lower part
Boîtier de moteur pourvu d'un trou d'écoulement dans sa partie basse

(43) Veröffentlichungstag der Anmeldung: 14.04.1993
(73) Patentinhaber: SIEMENS AKTIENGESELLSCHAFT, 80333 München (DE)
(72) Erfinder: Adam, Peter, Dipl.-Ing. grad., W-8706 Höchberg (DE); Deynet, Rolf, Dipl.-Ing., W-8700 Würzburg (DE)

(56) Entgegenhaltungen:
- EP-A- 0 221 304
- WO-A-88/06368
- DE-B- 1 161 352
- PATENT ABSTRACTS OF JAPAN vol. 11, no. 11 (E-470)(2458) 13. Januar 1987

## Beschreibung

Die Erfindung bezieht sich auf einen mit einem unteren Ablaufloch und Ablaufkanal versehenen Motor gemäß Oberbegriff des Anspruchs 1; ein derartiger Motor ist aus der WO-A-8 806 368 bekannt.

Im vorgenannten bekannten Fall ist ein als Gußteil hergestellter, an einer Stirnseite eines zylinderförmigen Motorgehäuses zu montierender kappenförmiger Lagerschild mit einem parallel zum axialen Kappenmantel verlaufenden Ablaufkanal vorgesehen, wobei durch nachträgliche Bearbeitung des Lagerschildes im Bereich des Ansatzes des Ablaufkanals am Kappenmantel ein Abflußloch hergestellt wird.

In einem weiteren, durch die EP-B1-0 221 304 bekannten Fall ist an der unteren Seite des Motorgehäuses im Gehäuse-Mantel ein radiales Ablaufloch vorgesehen, aus dem gegebenenfalls in das Innere des Motorgehäuses eingedrungene Feuchtigkeit oder im Motorgehäuse selbst gebildetes Schwitzwasser abfließen soll. Es hat sich gezeigt, daß eine derartige Abflußöffnung nicht immer die geforderten Bedingungen erfüllen kann; durch das von außen in den Gehäuse-Mantel eingebrachte Ablaufloch besteht eine Gratbildung, die ein Ablaufen der Feuchtigkeit aus dem Inneren des Motorgehäuses behindern kann bzw. besteht die Gefahr, daß ein außen vor der Abflußöffnung gebildeter Wassertropfen beim Anlaufen des Rotors des Motors in das Innere des Motorgehäuses gesaugt wird.

Gemäß Aufgabe vorliegender Erfindung soll eine Ablaufvorrichtung geschaffen werden, die mit einfachen konstruktiven und fertigungstechnischen Mitteln, ein sicheres Ablaufen von Kondenswasser aus dem Inneren nach außen gewährleisten bzw. ein unerwünschtes Eindringen von Tropfwasser von außen in das Innere des Motorgehäuses mit Sicherheit verhindern kann.

Die Lösung dieser Aufgabe gelingt bei einem Motor der eingangs genannten Art durch die Lehre des Anspruchs 1; vorteilhafte Ausgestaltungen der Erfindung sind jeweils Gegenstand der Unteransprüche.

Die erfindungsgemäße Konstruktion erlaubt es, bei der Fertigung des Motorgehäuses, in einem einfachen Arbeitsgang, gleichzeitig vom Motorinneren zum Motoräußeren aus der Stirnseite des Motorgehäuses durch Freistanzen ein, zumindest nach innen gratfreies, von der Unterseite des Gehäuse-Mantels ausgehendes Ablaufloch zu schaffen und mit einer von dessen Unterkante nach unten verlaufenden Abtropfzunge derart auszubilden, daß einerseits von innen nach außen Schwitzwasser ungehindert ablaufen kann und andererseits ein äußerer Wassertropfen sich nicht vor dem Ablaufloch ansammeln kann, sondern über die Abtropfzunge zwangsweise von dem Ablaufloch weggeführt wird.

Zweckmäßigerweise wird in weiterer fertigungstechnischer Vereinfachung der Lappen durch ein entsprechend weitergebildetes Tiefziehwerkzeug zur Formung des topfförmigen Motorgehäuses, freigestanzt bzw. abgebogen, wobei in vorteilhafter Weise eine Abwinkelung der Abtropfzunge relativ zum anschließenden Verlauf der Unterseite des Motorgehäuses um einen Winkel α von ca. 60° vorgesehen ist.

Die Erfindung sowie weitere vorteilhafte Ausgestaltungen der Erfindung gemäß Merkmalen der Unteransprüche werden im folgenden anhand eines schematisch dargestellten Ausführungsbeispiels in der Zeichnung näher erläutert; darin zeigen:
- FIG 1: in einem axialen Schnittbild gemäß Schnittverlauf I-I in FIG 2 das topfförmige Motorgehäuse eines z.B. zum Antrieb eines Kraftfahrzeug-Fensterheberantriebs vorgesehenen Elektromotors;
- FIG 2: die stirnseitige Draufsicht auf den Gehäuse-Topfboden des Motorgehäuses gemäß FIG 1

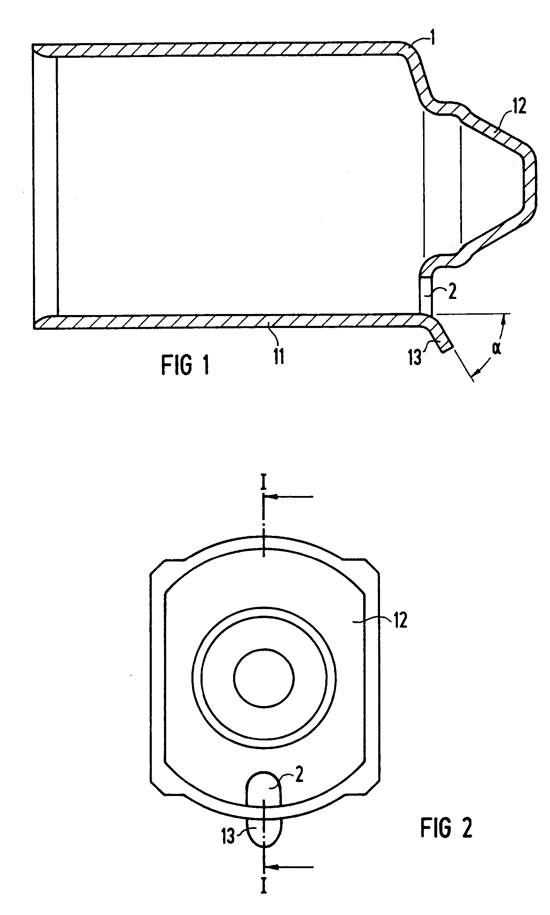

FIG 1,2 zeigen das einstückige topfförmige Motorgehäuse 1 eines, zum Antrieb eines Kraftfahrzeug-Fensterheber vorgesehenen, Kommutatormotors mit einem Gehäuse-Mantel 11 und einem Gehäuse-Topfboden 12. Bei der Komplettierung eines solchen Kommutatormotors werden z.B. am Innenumfang des Motorgehäuse-Mantels 11 teilschalenförmige Dauermagnete für eine Statorerregung befestigt und von der linken offenen Stirnseite des Motorgehäuses 1 ein im Motorgehäuse-Topfboden 12 gehaltenes erstes Rotor-Lager und anschließend ein mit einer Kommutator-Wicklung und einem Kommutator vorgesehener Rotor und eine Bürstenhalterung eingeschoben; anschließend wird die offene Stirnseite des Motorgehäuses 1 durch einen das zweite Rotor-Lager aufnehmenden Lagerschild abgeschlossen.

Zur Gewährleistung eines sicheren Ablaufens von innerhalb des Motorgehäuses 1 sich gegebenenfalls bildendem Kondens- bzw. Schwitzwasser einerseits und/oder zur Verhinderung des Eindringens von äußeren Wassertropfen in das Innere des Motorgehäuses 1 andererseits sind in den Gehäuse-Topfboden 12 von der Unterkante des Motorgehäuse-Mantels 11 radial nach oben ausgehend ein Ablaufloch 2 und nach unten verlaufend eine Abtropfzunge 13 vorgesehen. In vorteilhafter Weise sind das Ablaufloch 2 durch Freistanzen eines aus dem Motor-Topfboden 12 gelösten, jedoch mit dem Motorgehäuse-Mantel 11 an seiner Unterkante einstückig verbunden bleibenden Lappens und die Abtropfzunge 13 durch entsprechendes Abwinkeln dieses Lappens nach unten gebildet.

Bei der Herstellung eines derartigen Ablaufloches mit einer derartigen Abtropfzunge wird zweckmäßigerweise das zur Bildung des topfförmigen Motorgehäuses an sich vorzusehene Tiefziehwerkzeug entsprechend derart weitergebildet, daß mit dem Tiefziehvorgang auch der Lappen aus dem Gehäuse-Topfboden 12 freigestanzt und zumindest teilweise bereits nach unten abgebogen werden kann.

Zweckmäßigerweise ist eine Abwinklung der Abtropfzunge 13 relativ zum anschließenden Verlauf der Unterseite des Motorgehäuses 1 um einen Winkel α von ca. 60° vorgesehen; dadurch ist sichergestellt, daß bei der üblichen Schräglage eines derartigen Motors mit gegenüber der offenen Stirnseite des Motorgehäuses 1 nach unten verlagerter Topfbodenseite, insbesondere bei einem zum Antrieb eines Kraftfahrzeug-Fensterhebers vorgesehenen Kommutatormotor, bei an der tiefsten Stelle des Motorgehäuses angeordnetem Ablaufloch die Funktion der Abtropfzunge 13 derart sichergestellt ist, daß ein gegebenenfalls von außen vor dem Ablaufloch 2 sich ansammelnder Feuchtigkeitstropfen zwangsweise von dem Ablaufloch 2 weg entlang der Abtropfzunge 13 zu dessen Unterseite abläuft und somit nicht mehr durch den sich drehenden Rotor in das Innere des Motorgehäuses angesaugt werden kann.

Um bei einem mit einem unteren Ablaufloch 2 versehenen, vorzugsweise topfförmigen Motorgehäuse 1 ein sicheres Ablaufen von Kondenswasser aus dem Inneren nach außen gewährleisten bzw. ein unerwünschtes Eindringen von Tropfwasser von außen in das Innere des Motorgehäuses 1 mit einfachen Mitteln verhindern zu können, wird nach der besonders vorteilhaften Ausgestaltung der Erfindung somit mit dem für das Tiefziehen des Motorgehäuses 1 vorgesehenen Werkzeug aus dem Gehäuse-Topfboden 12 ein Lappen derart freigestanzt und abgebogen, daß sich ein von der Unterkante des Motorgehäuses 1 nach oben ausgehendes Ablaufloch 2 mit einer nach unten abgewinkelten Abtropfzunge 13 ergibt.

## Patentansprüche

1. Mit einem unteren Ablaufloch (2) und Ablaufkanal -Abtropfzunge (13)- versehener, ansonsten feuchtigkeitsdicht abgeschlossener Motor, insbesondere für einen Kraftfahrzeug-Fensterheberantrieb, **dadurch gekennzeichnet,** daß das Ablaufloch (2) durch Freistanzen eines aus dem Gehäuse-Topfboden (12) eines topfförmigen, als Blechteil tiefgezogenen Motorgehäuses (1) gelösten, jedoch mit dem Gehäuse-Mantel (11) an seiner Unterkante einstückig verbundenen Lappens und die Abtropfzunge (13) durch entsprechendes Abwinkeln -Winkel (α)- des Lappens gebildet sind.

2. Motor nach Anspruch 1, **dadurch gekennzeichnet,** daß zumindest das Ablaufloch mit einem entsprechend weitergebildeten Tiefziehwerkzeug zur Formung des topfförmigen Motorgehäuses (1) zumindest freigestanzt ist.

3. Motor nach Anspruch 1 oder 2, **gekennzeichnet durch** eine Abwinkelung der Abtropfzunge (13) relativ zum anschließenden Verlauf der Unterseite des Motorgehäuses (1) um einen Winkel (α) von ca. 60°.

## Claims

1. Motor provided with a lower drainage hole (2) and drainage channel drip tongue (13) and otherwise sealed moisture-tight, in particular for the drive of a motor vehicle window lifter, characterised in that the drainage hole (2) is formed by punching out a tab which is detached from the housing pot base (12) of a pot-shaped motor housing (1) deep-drawn as a sheet steel part, yet which is connected in one piece to the housing casing (11) at its lower edge, and the drip tongue (13) is formed by a corresponding tangent-bending of the tab by an angle (α).

2. Motor according to claim 1, characterised in that at least the drainage hole is at least punched out, using a suitably developed deep-drawing tool, to form the pot-shaped motor housing (1).

3. Motor according to claim 1 or 2, characterised by a tangent-bending of the drip tongue (13) relative to the adjacent gradient of the underside of the motor housing (1) by an angle (α) of approximately 60°.

## Revendications

1. Moteur muni d'un trou inférieur d'évacuation (2) et d'un canal d'évacuation - languette d'égouttage (13)-, mais sinon fermé d'une manière étanche à l'humidité, notamment pour un dispositif de lève-glace de véhicule automobile, caractérisé par le fait que le trou d'évacuation (13) est découpé dans une patte, qui est détachée du fond (12) d'un carter en forme de pot (1) du moteur, formé par emboutissage profond d'une tôle, mais est raccordée d'un seul tenant à l'enveloppe (11) par son bord inférieur, et les languettes d'égouttage (13) sont formées en coudant comme il convient - angle (α) - la patte.

2. Moteur suivant la revendication 1, caractérisé par le fait qu'au moins le trou d'évacuation est au moins découpé au moyen d'un outil d'emboutissage profond agencé de façon adéquate pour la formation du carter en forme de pot (1) du moteur.

3. Moteur suivant la revendication 1 ou 2, caractérisé par un coudage de la languette d'égouttage (13) d'un angle (α) d'environ 60° par rapport au prolongement de la partie inférieure du carter (1) du moteur.
